(19) Europäisches Patentamt
European Patent Office
Office européen des brevets

(11) Veröffentlichungsnummer: **0 106 117**
**B1**

(12) # EUROPÄISCHE PATENTSCHRIFT

(45) Veröffentlichungstag der Patentschrift: **13.08.86**

(51) Int. Cl.⁴: **C 01 G 15/00**, C 22 B 3/00, C 22 B 58/00

(21) Anmeldenummer: **83108814.1**

(22) Anmeldetag: **07.09.83**

(54) **Verfahren zur Abtrennung von Gallium und Indium aus wässrigen Lösungen.**

(30) Priorität: **23.09.82 DE 3235136**

(43) Veröffentlichungstag der Anmeldung: **25.04.84 Patentblatt 84/17**

(45) Bekanntmachung des Hinweises auf die Patenterteilung: **13.08.86 Patentblatt 86/33**

(84) Benannte Vertragsstaaten: **BE CH DE FR GB LI**

(56) Entgegenhaltungen:
**EP-A-0 008 992**
**EP-A-0 021 990**
**EP-A-0 023 173**
**DE-A-2 239 591**
**US-A-4 242 314**
**US-A-4 292 284**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Schimmel, Günther, Dr., Ehrenstrasse 16, D-5042 Erftstadt (DE)**
Erfinder: **Heymer, Gero, Dr., Fasanenaue 12, D-5042 Erftstadt (DE)**
Erfinder: **Krause, Werner, Dr., Alleestrasse 42, D-5030 Hürth (DE)**
Erfinder: **Pieper, Werner, Dr., Am Wachberg 27a, D-5042 Erftstadt (DE)**

**EP 0 106 117 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die vorliegende Erfindung betrifft ein Verfahren zur Abtrennung von Gallium und Indium aus wäßrigen, insbesondere mineralsauren, wie salzsauren, salpetersauren und schwefelsauren Lösungen durch flüssig/flüssig Extraktion mit Organylphosphonsäureestern und Trennung der dabei entstehenden flüssigen Phase voneinander.

Es ist bekannt, daß Gallium aus wäßrigen Lösungen mit Hilfe von Komplexbildnern extrahierbar ist. Insbesondere aus stark salzsauren Lösungen kann Gallium mit Hilfe von Tri-n-octylphosphin-oxid (TOPO) (Y. Hasegawa, J. Inorg. nucl. Chem *47*, 1487 (1980)) oder auch mittels Tributylphosphat (A. de Schepper, Hydromet. *4*, 285 (1979)) in guten Ausbeuten extrahiert werden.

Ebenfalls bekannt ist die Extraktion von Gallium aus stark basischen Lösungen mittels Alkenylhydroxychinolinen (DE—A—25 30 880, DE—A—29 21 061).

Ferner ist bekannt, die Extraktion von Indium aus z.B. schwefelsauren Lösungen mittels Di(2-ethylhexyl)phosphorsäureester [DEHPA] (EP—A—0 008 992) oder mit einem Gemisch von Dialkyl- und Trialkylphosphorsäureester (US—A—4 292 284) durchzuführen.

Bisher fehlt es jedoch an geeigneten Extraktionsmitteln, um Gallium aus mineralsauren Lösungen, vor allem solchen, die nicht zu starck chloridhaltig sind, in hohen Ausbeuten zu extrahieren. Ebenfalls für den schwach alkalischen Bereich fehlt für diesen Zweck ein geeignetes Extraktionsmittel.

Obwohl die Extraktion von Indium aus schwefelsauren Lösungen an sich bekannt ist, wäre es auch in diesem Falle wünschenswert, ein Extraktionsmittel zur Hand zu haben, das besonders hohe Extraktionsausbeuten ermöglicht.

Phosphonsäurederivate sind zwar auch schon als Extraktionsmittel für Gallium beschrieben worden, jedoch waren die Ausbeuten bislang unbefriedigend. Als Extraktionsmittel wurden dabei beispielsweise Methylendiphosphonate, Carbamoylphosphonate und Carbamoylmethylendiphosphonate eingesetzt, deren Herstellung zudem aufwendig und kostenintensiv ist (C.A. *90*, 157 807 z. 1979).

Überraschenderweise wurde nun gefunden, daß sich bei der Abtrennung von Gallium und Indium aus wäßrigen Lösungen, insbesondere solchen, die mineralsauer oder schwach alkalisch sind, im Rahmen einer flüssig/flüssig Extraktion bedeutende Verbesserungen dann erzielen lassen, wenn man zur Extraktion als Organylphosphonsäureester entweder

a) Verbindungen der allgemeinen Formel I

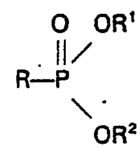

oder

b) Gemische, die aus Verbindungen der allgemeinen Formel II

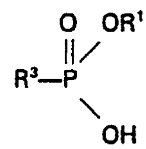

und bis zu 90% aus Verbindungen der allgemeinen Formel III

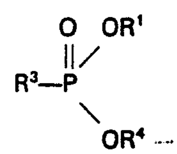

bestehen, oder

c) solche Gemische einsetzt, die aus Verbindungen der allgemeinen Formeln I, II und III bestehen, wobei in den Formeln R die Bedeutung eines Restes

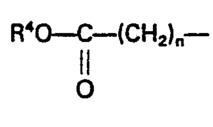

zukommt.

$R^1$, $R^3$ und $R^4$ gleich oder ungleich Alkyl-, Cycloalkyl- oder Arylgruppen mit 2 bis 20, vorzugsweise 5 bis

10 C-Atomen darstellen, n einer ganzen Zahl von 0 bis 4 entspricht und $R^2$ die gleiche Bedeutung wie $R^1$, $R^3$ und $R^4$ oder die von Wasserstoff hat.

Obwohl die Verwendung von Organylphosphonsäuremono- oder -diester zur Extraktion von Gallium oder von Indium an sich bekannt war (EP—A—0 021 990 und DE—A—22 39 591), konnte nicht vorhergesehen werden, daß mit Gemischen dieser Ester aufgrund synergistischer Effekte wesentlich bessere Ergebnisse erzielt werden.

Vorteilhafterweise werden die Organylphosphonsäureester in Form von Lösungen inerter organischer Lösungsmittel eingesetzt, wobei sich als organische Lösungsmittel Kohlenwasserstoff, wie z.B. Kerosin, besonders gut eignen, Aus wirtschaftlichen Gründen sowie zur guten Phasentrennung empfehlen sich Lösungen, die 2 bis 30 Gew.%, vorzugsweise 10 bis 20 Gew.%, Organylphosphonsäureester enthalten.

Die erfindungsgemäß eingesetzten Extraktionsmittel weisen in schwachen und mittelstarken Säuren hervorragende Ausbeuten auf. So werden z.B. Gallium und Indium aus 1 N Schwefelsäure fast quantitativ extrahiert, während z.B. DEHPA Gallium gar nicht und Indium schlechter extrahiert. Aus 1,4 N Salzsäure extrahieren die erfindungsgemäßen Mittel besser als z.B. TOPO oder Tributylphosphat [TBP]. Auch aus schwach basischen Lösungen weisen die neuen Extraktionsmittel höhere Verteilungskoeffizienten für gallium auf als die bekannte Substanzklasse der substituierten Hydrochinoline.

Bemerkenswert ist ferner die Selektivität des erfindungsgemäßen Verfahrens gegenüber anderen Elementen, z.B. Zink oder Aluminium.

In den folgenden Beispielen werden Vertreter der erfindungsgemäßen Verbindungsklassen bekannten Extraktionsmittel gegenübergestellt, wobei ihre vorzügliche Wirksamkeit deutlich wird. Ein Anspruch auf Vollständigkeit wird dadurch nicht hergeleitet. Die zahlenmäßigen Ergebnisse sind in der abschließenden Tabelle zusammengefaßt.

Beispiele 1 und 2

Eine 5 N Schwefelsäure, enthaltend je 200 ppm Gallium und Zink, wird im Volumenverhältnis wäßrige Phase A: organische Phase O=1:1 mit einer 20 %igen Lösung von einem Gemisch aus gleichen Teilen Octylphosphonsäuremono- und -dihexylester (I) bzw. von (2-Ethylhexoxycarbonyl)methanphosphonsäure - bis - (2 - ethylhexyl)ester (II), jeweils gelöst in Kerosin 20 min intensiv gerührt und anschließend der Gehalt an Ga und Zn in der wäßrigen Phase bestimmt.

Beispiele 3 und 4

Eine 1 N Schwefelsäure, enthaltend je 400 ppm Gallium, Zink, Indium und Aluminium wird wie in Beispiel 1 und 2 extrahiert.

Beispiele 5 und 6 (Vergleichsbeispiele)

Es wird die schwefelsaure Lösung aus Beispiel 3, 4 mit einer 20 %igen Lösung von DEHPA (III) bzw. Octylphosphonsäuredibutylester (IV) in Kerosin im Volumenverhältnis der Phasen A: O=1:1 20 min intensiv gerührt und anschließend die Extraktionsausbeute bestimmt.

Beispiele 7 und 8

Eine 0,2 N Schwefelsäurelösung, enthaltend je 200 ppm Gallium, Zink und Indium wird im Verhältnis A: O=10:1 mit einer 20 %igen Lösung von (2 - Ethylhexoxycarbonyl)methanphosphonsäure - bis(2 - ethylhexyl)ester (II) bzw. (2 - Ethylhexoxycarbonyl)phosphonsäure - bis(2 - ethylhexyl)ester E(V) extrahiert und die Extraktionsausbeute bestimmt.

Beispiel 9 und 10

Eine 1,4 N Salzsäure, enthaltend je 400 ppm Gallium, Zink, Indium und Aluminium, wird mit einer 20 %igen Lösung von I bzw. II im Verhältnis A: 0=1:1 extrahiert und die Ausbeute bestimmt.

Beispiele 11 und 12

Eine 0,25 N Salzsäure, enthaltend je 200 ppm Zink, Gallium und Indium wird analog Beispiel 9 und 10 mit I und II extrahiert.

Beispiele 13, 14 und 15 (Vergleichsbeispiele)

Es wird wie in den Beispielen 11 und 12 verfahren, wobei als Extraktionsmittel Tri - n - octylphosphinoxid (VI), Octylphosphonsäure - bis(2 - ethylhexyl)ester (VII) sowie Bis - (2 - ethylhexyl)-carbonylmethanphosphonsäurediethylester (VIII) verwendet werden.

Beispiele 16, 17 und 18

Eine 0,25 N Natronlauge, enthaltend 200 ppm Gallium, wird mit einer 20 %igen Lösung von I, II und Alkenylhydroxychinolin (IX) im Verhältnis A: 0=1:1 extrahiert und die Extraktionsausbeute bestimmt.

| Beispiel | Extraktions-mittel | ppm vor Extraktion | | | | ppm nach Extraktion | | | | % Ausbeute | | | |
|---|---|---|---|---|---|---|---|---|---|---|---|---|---|
| | | Ga | In | Zn | Al | Ga | In | Zn | Al | Ga | In | Zn | Al |
| 1 | I | 200 | — | 200 | — | 70 | — | 200 | — | 65,0 | — | 0 | — |
| 2 | II | 200 | — | 200 | | 120 | — | 200 | — | 40,0 | — | 0 | — |
| 3 | I | 400 | 400 | 400 | 400 | 40 | <5 | 400 | 50 | 90,0 | >98,8 | 0 | 87,5 |
| 4 | II | 400 | 400 | 400 | 400 | 8 | <5 | 400 | 85 | 98,0 | >98,8 | 0 | 78,8 |
| 5 | III | 400 | 400 | 400 | — | 400 | 40 | 380 | — | 0 | 90,0 | 5,0 | — |
| 6 | IV | 400 | 400 | 400 | 400 | 400 | 400 | 400 | 400 | 0 | 0 | 0 | 0 |
| 7 | II | 200 | 200 | 200 | — | <1 | <1 | 170 | — | >99,5 | >99,5 | 15,0 | — |
| 8 | V | 200 | 200 | 200 | — | <1 | <1 | 200 | — | >99,5 | >99,5 | 0 | — |
| 9 | I | 400 | 400 | 400 | 400 | 65 | 130 | 200 | 160 | 83,8 | 67,5 | 50,0 | 60,0 |
| 10 | II | 400 | 400 | 400 | 400 | 49 | 120 | 400 | 290 | 87,8 | 70,0 | 0 | 27,5 |
| 11 | I | 200 | 200 | 200 | — | <1 | 20 | 170 | — | >99,5 | 90,0 | 15,0 | — |
| 12 | II | 200 | 200 | 200 | — | <1 | 15 | 170 | — | >99,5 | 92,5 | 15,0 | — |
| 13 | VI | 200 | 200 | 200 | — | 190 | 170 | 7 | — | 5,0 | 15,0 | 96,5 | — |
| 14 | VII | 200 | 200 | 200 | — | 170 | 105 | 200 | — | 15,0 | 47,5 | 0 | — |
| 15 | VIII | 200 | — | 200 | — | 100 | — | 20 | — | 50,0 | — | 10,0 | — |
| 16 | I | 200 | — | — | — | 1 | — | — | — | 99,5 | — | — | — |
| 17 | II | 200 | — | — | — | 1 | — | — | — | 99,5 | — | — | — |
| 18 | IX | 200 | — | — | — | 170 | — | — | — | 15,0 | — | — | — |

**Patentansprüche**

1. Verfahren zur Abtrennung von Gallium und Indium aus wäßrigen, insbesondere mineralsauren Lösungen durch flüssig/flüssig Extraktion dieser Lösungen mit Organylphosphonsäureestern und Trennung der dabei entstehenden flüssigen Phasen voneinander, dadurch gekennzeichnet, daß man als Organylphosphonsäureester entweder

a) Verbindungen der allgemeinen Formel I

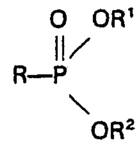

oder

b) Gemische, die aus Verbindungen, der allgemeinen Formel II

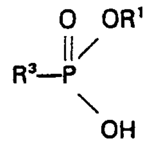

und bis zu 90% aus Verbindungen der allgemeinen Formel III

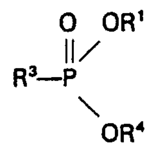

bestehen, oder

c) solche Gemische einsetzt, die aus den Verbindungen I, II und III bestehen, wobei in den Formeln R die Bedeutung eines Restes

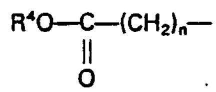

zukommt,

$R^1$, $R^3$ und $R^4$ gleiche oder ungleiche Alkyl-, Cycloalkyl- oder Arylgruppen mit 2 bis 20 C-Atomen darstellen, n einer ganzen Zahl von 0 bis 4 entspricht und $R^2$ die gleiche Bedeutung wie $R^1$, $R^3$ und $R^4$ oder die von Wasserstoff hat.

2. Verfahren nach Anspruch 1, dadurch gekennzeichnet, daß man die Organylphosphonsäureester in Form von Lösungen inerter organischer Lösungsmittel einsetzt.

3. Verfahren nach Anspruch 2, dadurch gekennzeichnet, daß man als organische Lösungsmittel Kohlenwasserstoffe einsetzt.

4. Verfahren nach Anspruch 2 oder 3, dadurch gekennzeichnet, daß man als Lösungsmittel Kerosin einsetzt.

5. Verfahren nach einem der Ansprüche 2—4, dadurch gekennzeichnet, daß man Lösungen einsetzt, die 2 bis 30 Gew.% Organylphosphonsäureester enthalten.

6. Verfahren nach einem der Ansprüche 1—5, dadurch gekennzeichnet, daß man Verbindungen einsetzt, in deren allgemeinen Formeln I, II und III die Reste $R^1$, $R^3$ und $R^4$ Alkyl-, Cycloalkyl- oder Arylgruppen mit 5 bis 10 C-Atomen darstellen.

**Revendications**

1. Procédé de séparation de gallium et d'indium de solutions aqueuses, en particulier de solutions d'acides minéraux, par extraction liquide/liquide de ces solutions à l'aide d'esters d'acides organylphosphoniques et séparation des phases liquides formées l'une de l'autre, caractérisé en ce que l'on utilise comme esters d'acides organylphosphoniques soit

a) des composés répondant à la formule générale I

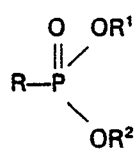

soit

b) des mélanges constitués par des composés répondant à la formule générale II

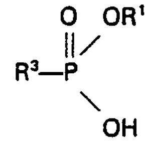

et jusq'à 90% de composés répondant à la formule générale III

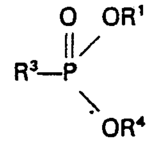

soit

c) des mélanges constitués par les composés répondant aux formules I, II et III, dans lesquelles R représente un groupe de formule

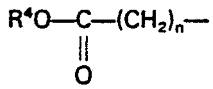

$R^1$, $R^3$ et $R^4$ sont identiques ou différents et représentent des groupes alkyle, cycloalkyle ou aryle en $C_2$—$C_{20}$, n représente un nombre entier de 0 à 4 et $R^2$ a la même signification que $R^1$, $R^3$ et $R^4$ ou représente l'hydrogène.

2. Procédé selon la revendication 1, caractérisé en ce que l'on utilise les esters d'acides organylphosphoniques sous forme de solutions dans des solvants organiques inertes.

3. Procédé selon la revendication 2, caractérisé en ce que l'on utilise des hydrocarbures comme solvants organiques.

4. Procédé selon la revendication 2 ou 3, caractérisé en ce que l'on utilise le kérosène comme solvant.

5. Procédé selon l'une des revendications 2 à 4, caractérisé en ce que l'on utilise des solutions contenant 2—30% en poids d'esters d'acide organylphosphoniques.

6. Procédé selon l'une des revendications 1 à 5, caractérisé en ce que l'on utilise des composés répondant aux formules générales I, II et III, dans lesquelles les substituants $R^1$, $R^3$ et $R^4$ représentent des groupes alkyle, cycloalkyle ou aryle en $C_5$—$C_{10}$.

## Claims

1. Process for separating gallium and indium from an aqueous, especially mineral acid solution by subjecting the solution to liquid/liquid extraction with the use of an organylphosphonic acid ester and separating the resulting liquid phases from one another, which comprises: using as the organylphosphonic acid ester either

a) a compound of the general formula I

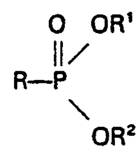

or

b) a mixture consisting of compounds of general formula II

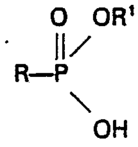

and up to 90% of compounds of general formula III

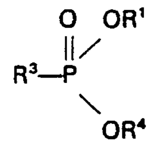

or

c) a mixture consisting of compounds of formulae I, II and III in which R stands for a radical of the formula

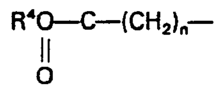

$R^1$, $R^3$ and $R^4$ stand for identical or different alkyl, cycloalkyl or aryl groups having from 2 to 20 carbon atoms, n stands for a whole number within the range 0 to 4, and $R^2$ has the same meaning as $R^1$, $R^3$ and $R^4$, or stands for hydrogen.

2. Process as claimed in claim 1, wherein the organylphosphonic acid ester is used in the form of a solution in an inert organic solvent.

3. Process as claimed in claim 2, wherein the organic solvent is a hydrocarbon.

4. Process as claimed in claim 2 or 3, wherein the solvent is kerosene.

5. Process as claimed in any of claims 2 to 4, wherein a solution containing 2 to 30 weight % organylphosphonic acid ester is used.

6. Process as claimed in any of claims 1 to 5, wherein compounds of general formulae I, II and III in which the substituents $R^1$, $R^3$ and $R^4$ stand for alkyl, cycloalkyl or aryl groups having from 5 to 10 carbon atoms, are used.